# EUROPÄISCHE PATENTSCHRIFT

(11) **EP 3 135 927 B1**
(45) Veröffentlichungstag und Bekanntmachung des Hinweises auf die Patenterteilung: **24.02.2021**
(21) Anmeldenummer: 16185226.4
(22) Anmeldetag: 23.08.2016
(51) Int. Cl.: F16B 25/00

(54) **SCHRAUBE ZUM EINSCHRAUBEN IN EIN BOHRLOCH UND ANORDNUNG MIT EINER DERARTIGEN SCHRAUBE**
SCREW FOR SCREWING INTO A SCREW-HOLE AND ARRANGEMENT COMPRISING SAID SCREW
VIS AUTO-TARAUDEUSE DESTINEE A VISSER DANS UN ALESAGE ET AGENCEMENT DOTE D'UNE TELLE VIS

(30) Priorität: 25.08.2015 DE 102015216237
(43) Veröffentlichungstag der Anmeldung: 01.03.2017
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 1 188 938
- EP-A1- 1 275 861
- EP-A1- 1 862 677
- EP-A2- 1 936 213
- DE-A1- 10 113 946
- DE-A1-102007 023 735
- DE-A1-102010 031 410
- JP-A- 2008 291 870
- US-A1- 2013 336 744

## Beschreibung

Die Erfindung betrifft eine Schraube zum Einschrauben in ein Bohrloch, insbesondere in einem porösen Material, insbesondere Beton, sowie eine Anordnung mit einer derartigen Schraube.

Betonschrauben werden in ein Bohrloch eingedreht. Ein Schneidgewinde schneidet Gewindefurchen in die Zylinderwand des Bohrlochs, an welchem die Betonschraube mit einem Traggewinde gehalten und im Beton verankert ist. Die Verankerung der Schraube im Beton ist umso höher, je größer die Einschraubtiefe ist. Eine hohe Einschraubtiefe bewirkt einen großen Widerstand beim Eindrehen der Schraube. Ein zu großer Eindrehwiderstand kann zum Versagen der Schraube beim Eindrehen führen.

Derartige Betonschrauben sind beispielsweise aus der DE 10 2010 031 410 A1, der DE 101 139 46 A1, der EP 1 936 213 A2 und der EP 1 188 938 A1 bekannt.

Der Erfindung liegt die Aufgabe zugrunde, eine Schraube zum Einschrauben in ein Bohrloch derart zu verbessern, dass bei möglichst geringer Einschraubtiefe eine möglichst hohe Belastung der Schraube möglich ist.

Diese Aufgabe wird durch die Merkmale der Ansprüche 1 und 12 gelöst. Der Kern der Erfindung besteht darin, dass eine Schraube ein einstückig mit einem Kern ausgebildetes Abstützelement zum Abstützen der Schraube in einem Bohrloch aufweist. Wesentlich ist auch, dass das Abstützelement als Abstützgewinde ausgeführt ist, wobei das Abstützgewinde im Wesentlichen als eine entlang der Mittellängsachse sich begrenzt erstreckende Verdickung der Flanken des Schneidgewindes ausgeführt ist. Dadurch kann der Kern selbst mit einem reduzierten Kern-Durchmesser ausgeführt werden. Ein zwischen dem Kern und dem Bohrloch gebildeter Ringspalt ist vergrößert. Der Ringspalt bildet ein gegenüber aus dem Stand der Technik bekannten Schrauben vergrößertes Volumen für Abraummaterial oder im Bohrloch an den Wandungen verbliebenes Bohrmehl, das durch das Einschneiden von Gewindefurchen mittels eines Schneidgewindes anfällt. Zudem kann der Kern und damit die Schraube insgesamt zuverlässig mit dem Abstützelement im Bohrloch abgestützt werden. Das Abstützelement gewährleistet ein stabiles und fehler-unanfälliges Einschrauben der Schraube in das Bohrloch. Durch die Verwendung des Abstützelements ist es entbehrlich, eine Schraube mit einem zylindrischen Kern bereitzustellen, der entlang einer Mittellängsachse einen vergrößerten Kern-Durchmesser aufweist. Eine Abstützung des Kerns am Bohrloch ist entbehrlich. Gegenüber den aus dem Stand der Technik bekannten Schrauben kann die erfindungsgemäße Schraube einen reduzierten Kern-Durchmesser aufweisen. Der Materialaufwand für die Schraube ist reduziert. Die Schraube ist leicht bauend. Der Kern ist im Wesentlichen zylindrisch ausgeführt. Die Schraube dient zum Einschrauben in ein Bohrloch in einem porösen Material, insbesondere Beton. Die Schraube weist ein Schneidgewinde auf, das einstückig mit dem Kern ausgebildet ist. Das Schneidgewinde erstreckt sich entlang eines Schneidgewinde-Abschnitts. Das Schneidgewinde weist einen Schneidgewinde-Außendurchmesser auf. Das Schneidgewinde dient zum Eindrehen in das das Bohrloch umgebende Material. Durch das Eindrehen des Schneidgewindes werden in die Zylinderfläche des Bohrlochs Gewindefurchen geschnitten.. Eine Schraube mit einem am Schneidgewinde angeordneten Schneidelement erhöht die Schneidleistung. Insbesondere sind entlang des Schneidgewindes mehrere Schneidelemente vorgesehen. Beispielsweise können bis zu zehn Schneidelemente oder mehr vorgesehen sein. Die Schneidelemente sind entlang des Schneidgewindes insbesondere regelmäßig beabstandet angeordnet. Insbesondere beträgt ein Drehwinkel um die Mittellängsachse zwischen zwei benachbarten Schneidelementen 90°. Bei einer Schraube, bei der das Schneidelement am Schneidgewinde, insbesondere in radialer Richtung bezogen auf die Mittellängsachse, übersteht, ist die Schneidleistung erhöht. Das Schneidelement schneidet eine vergleichsweise tiefe Gewindefurche in die Bohrlochinnenwand. Dadurch, dass das Abstützelement einstückig mit dem Kern ausgebildet ist, ist die Herstellung des Abstützelements vereinfacht. Insbesondere kann das Abstützelement in einem Walzprozess unmittelbar an den Kern angeformt werden. Insbesondere ist es nicht erforderlich, das Abstützelement separat, insbesondere durch Anschweißen, an dem Kern zu befestigen. Die Festigkeit des Abstützelements und insbesondere die Verbindung zwischen dem Abstützelement und dem Kern ist erhöht. Ein unbeabsichtigtes Lösen des Abstützelements von dem Kern ist im Wesentlichen ausgeschlossen. Es können mehrere Abstützelemente vorgesehen sein, um insbesondere den Kern entlang seines äußeren Umfangs an dem Bohrloch mit verbesserter Abstützwirkung, insbesondere durch eine vergrößerte Kontaktfläche zwischen dem Abstützelement und der Bohrlochinnenwandung zu schaffen. Die zentrierte Anordnung der Schraube im Bohrloch führt zudem dazu, dass die Kontaktfläche zwischen den Gewindeflanken in Zugrichtung, also entlang der Mittellängsachse, an den Betongewinden minimiert ist und dadurch ist eine sogenannte Schabwirkung der Schraube minimiert. Dies führt zu verbesserten Ergebnissen bei einer Tauglichkeitsprüfung für die Betonschraube. Bei einer derartigen Tauglichkeitsprüfung wird die Schraube in einem Material mit definierten Rissen verankert. Eine derart verankerte Schraube wird gezielt belastet und der Riss mehrfach geöffnet und wieder geschlossen. Je größer die Kontaktfläche zwischen den Gewindeflanken und dem Betongewinde ist, desto größer ist die Gefahr eines Abschabens des Betons an der Kontaktfläche. Die Gefahr ist bei der erfindungsgemäßen Schraube dadurch reduziert, dass die Kontaktfläche minimiert ist.

Eine Schraube, bei der sich das Abstützelement schraubenlinienförmig zumindest abschnittsweise entlang des Schneidgewinde-Abschnitts erstreckt, ermöglicht eine zuverlässige und unkomplizierte Abstützung. Insbesondere sind das Schneidgewinde und das Abstützelement bezogen auf die Mittellängsachse parallel zueinander angeordnet. Das bedeutet, dass das Abstützelement sich linienförmig entlang einer Schraubenlinie erstreckt, die identisch ist mit der Schraubenlinie des Schneidgewindes. In einer radialen Richtung bezüglich der Mittellängsachse ist das Abstützelement zwischen dem Kern und dem Schneidgewinde angeordnet. Das Schneidgewinde kann an der Bohrlochinnenwandung anliegen und insbesondere eine linieförmige Abstützung der Schraube ermöglichen. Die Gefahr eines Verkippens der Schraube gegenüber einer Bohrloch-Längsachse ist reduziert.

Eine Schraube, bei der das Abstützelement einen Abstützelement-Außendurchmesser aufweist, der kleiner ist als der Schneidgewinde-Außendurchmesser, gewährleistet eine vorteilhafte Abstützung der Schraube an der Bohrlochinnenwandung und insbesondere an einem Übergang der Bohrlochinnenwandung zu den von dem Schneidgewinde eingeschnittenen Gewindefurchen. Insbesondere beträgt der Abstützelement-Außendurchmesser höchstens 90% des Schneidgewinde-Außendurchmessers, insbesondere höchstens 85%, insbesondere höchstens 80% und insbesondere höchstens 75%.

Eine Schraube, bei der das Abstützelement einen Abstützelement-Außendurchmesser aufweist, der größer ist als der Kern-Durchmesser, gewährleistet einen ausreichend großen Ringspalt zwischen dem Kern und der Bohrlochinnenwandung. Insbesondere beträgt der Abstützelement-Außendurchmesser mindestens 105% des Kern-Durchmessers, insbesondere mindestens 107%, insbesondere mindestens 110% und insbesondere mindestens 113%.

Eine Schraube, bei der das Abstützelement einstückig mit dem Schneidgewinde ausgeführt ist, ermöglicht eine vorteilhafte, insbesondere unkomplizierte, Herstellung der Schraube. Insbesondere kann die Schraube mit dem zylindrischen Kern, dem einstückig an dem Kern angeformten Abstützelement und dem einstück an dem Abstützelement angeformten Schneidgewinde in einem einzigen Walzprozess hergestellt werden. Die Festigkeit der Schraube ist dadurch erhöht. Eine spanende Bearbeitung zur Herstellung des Schneidgewindes und/oder des Abstützelements ist entbehrlich.

Eine Schraube, bei der das Abstützelement als Abstützgewinde mit einem Abstützgewinde-Flankenwinkel ausgeführt ist, ermöglicht eine beidseitige Abstützung der Schraube an einer Gewindefurche entlang der Mittellängsachse. Das Abstützgewinde ermöglicht zudem einen, insbesondere gestuften, Übergang von dem Schneidgewinde zu dem Kern. Der Abstützgewinde-Flankenwinkel beträgt insbesondere zwischen 40° und 160°, insbesondere zwischen 50° und 150°, insbesondere zwischen 75° und 140°, insbesondere zwischen 90° und 135°, insbesondere zwischen 100° und 130° und insbesondere 120°.

Eine Schraube, bei der das Abstützelement entlang der Mittellängsachse veränderlich ausgeführt ist, ermöglicht eine Anpassung des Abstützelements an die Bohrlochgeometrie, insbesondere an die Geometrie der eingeschnittenen Gewindefurchen. Eine veränderliche Ausführung des Abstützelements kann beispielsweise durch eine Veränderung des Abstützelement-Außendurchmessers und/oder des Abstützgewinde-Flankenwinkels erfolgen. Die veränderliche Ausführung kann beispielsweise kontinuierlich erfolgen, indem der Abstützelement-Außendurchmesser entlang der Mittellängsachse kontinuierlich zu- oder abnimmt. Entsprechend kann die veränderliche Ausführung diskontinuierlich erfolgen, indem beispielsweise verschieden gestufte Abstützelement-Außendurchmesser und/oder Abstützgewinde-Flankenwinkel vorgesehen sind.

Entsprechend kann bei einer Schraube auch das Schneidgewinde entlang der Mittellängsachse veränderlich ausgeführt sein, um eine Anpassung an die Bohrlochgeometrie zu bewirken. Die veränderliche Ausführung kann durch Anpassung des Schneidgewinde-Außendurchmessers und/oder des Schneidgewinde-Flankenwinkels erfolgen. Entsprechend kann die veränderliche Ausführung kontinuierlich oder diskontinuierlich erfolgen.

Ein Verzahnungsüberstand, also die Differenz zwischen einem Schneidelement-Außendurchmesser und dem Schneidgewinde-Außendurchmesser, beträgt mindestens 3% der Gewindetiefe des Schneidgewindes. Die Gewindetiefe des Schneidgewindes ist die Hälfte der Differenz des Schneidgewinde-Außendurchmessers und des Kern-Durchmessers. Insbesondere beträgt der Verzahnungsüberstand mindestens 5% der Gewindetiefe des Schneidgewindes, insbesondere mindestens 8% und insbesondere mindesten 10%.

Eine Schraube, bei der das Schneidelement am Schneidgewinde aufgewalzt ist, vereinfacht die Herstellung, insbesondere in einem Verfahrenschritt. Insbesondere ist ein nachträgliches Anbringen eines Schneidelements am Schneidgewinde entbehrlich. Die Schneidelemente, die als Erhebungen gegenüber dem Schneidgewinde ausgeführt sind, sind aus vollem Material bis hin zu einem Einführende des Kerns auf das Schneidgewinde aufgewalzt. Dies kann beispielsweise durch ein entsprechend ausgeführtes Walzwerkzeug mit den Schneidelementen korrespondierenden Vertiefungen ausgeführt werden. Die Schneidelemente sind gegenüber der Mantelfläche des Schneidgewindes und/oder des Traggewindes erhaben ausgeführt. Dadurch bleibt die Auflagefläche des Traggewindes vollständig erhalten. Die Tragfähigkeit der Schraube ist dadurch erhöht. Gleichzeitig ist gewährleistet, dass lediglich die Schneidelemente Schneidarbeit leisten. Das bedeutet, dass die Tragflächen nicht verschleißen. Insbesondere ist die Kontaktfläche zwischen Schraube und Material, also Beton, reduziert und somit das Eindrehdrehmoment geringer. Um eine erhöhte Härte und damit Verschleißfestigkeit der Elemente zu schaffen, können die Schneidelemente gehärtet, insbesondere induktiv gehärtet, sein. Eine lokale Härtung der Schneidelemente kann auch durch Laserstrahlbearbeitung erfolgen. Die Härte beträgt insbesondere mindestens 57 HRC, insbesondere mindestens 60 HRC, insbesondere mindestens 62 HRC, insbesondere mindestens 64 HRC und insbesondere höchstens 65 HRC. Dadurch, dass die Schneidelemente eine Härte von mindestens 57 HRC aufweisen, ist gewährleistet, dass das Einschneiden des Gewindes in den Beton gewährleistet ist. Insbesondere ist auch gewährleistet, dass ein unbeabsichtigtes Kollidieren mit einer Armierung, die in dem Beton vorgesehen sein kann, nicht zum Versagen des Schneidgewindes führt. Dadurch, dass die Härte der Schneidelemente höchstens 65 HRC beträgt, ist gewährleistet, dass das Grundmaterial der Schraube, also der Kern, nicht versprödet. Der Kern der Schraube bleibt elastisch. Die Belastung der Schraube, insbesondere des Kerns während des Einschraubens ist unproblematisch. Insbesondere ist ein Brechen, insbesondere ein Abreißen der Schraube im Bereich des Kerns aufgrund der Einschraubbelastung ausgeschlossen. Die erhabenen Schneidelemente können aufgrund der Erhebungen gezielt, lokal gehärtet werden.

Eine Anordnung mit einem in einem Material angebrachten Bohrloch, das einen Bohrloch-Durchmesser aufweist und mit einer in das Bohrloch eingeschraubten Schraube ermöglicht eine vorteilhafte Kombination aus vergleichsweise geringer Einschraubtiefe bei vergleichsweise hoher Belastung der in dem Bohrloch eingeschraubten Schraube. Dadurch, dass die Schraube mit dem Abstützelement linienförmig schraubenlinienförmig entlang des Kerns an der Bohrlochinnenwandung abgestützt ist, ist eine automatische Zentrierung gewährleistet. Das Einschrauben der Schraube ist fehlerunanfällig und robust. Dadurch, dass der Kern-Durchmesser gegenüber dem Bohrloch-Durchmesser reduziert ist, ist das Eindrehdrehmoment reduziert. Ein Abreißen der Schraube ist im Wesentlichen ausgeschlossen. Dadurch, dass das Abstützelement zwischen dem Kern und dem Schneidgewinde angeordnet ist, ist die von dem Schneidgewinde zu leistende Schneidarbeit reduziert. Anschaulich bedeutet das, dass gegenüber herkömmlichen Betonschrauben weniger Material für die Einbringung der Gewindefurchen ausgeschnitten werden muss. Dadurch ist das Eindrehdrehmoment zusätzlich reduziert. Eine Anordnung, bei der der Kern-Durchmesser kleiner ist als der Bohrloch-Durchmesser, gewährleistet ausreichend Volumen für abgeriebenes Material. Insbesondere ist der Kern-Durchmesser höchstens 80% des Bohrloch-Durchmessers, insbesondere höchstens 85%, insbesondere höchstens 90%, insbesondere höchstens 95% und insbesondere höchstens 98%.

Eine Anordnung, bei der das Abstützelement einen Abstützelement-Außendurchmesser aufweist, der im Wesentlichen so groß ist wie der Bohrloch-Durchmesser gewährleistet eine stabile und zuverlässige Abstützung der Schraube mittels des Abstützelements am Bohrloch. Zudem ist gewährleistet, dass das Abstützelement nicht zu einer Erhöhung des Eindrehdrehmoments führt. Das Abstützelement behindert das Eindrehen der Schraube nicht. Insbesondere beträgt der Abstützelement-Außendurchmesser zwischen 95% und 105% des Bohrloch-Durchmessers, insbesondere zwischen 98% und 102%, insbesondere zwischen 99% und 101% und insbesondere zwischen 99,5 % und 100,5%.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: einen Längsschnitt einer Anordnung mit einer in einem Bohrloch eingeschraubten Schraube gemäß einem nicht erfindungsgemäßen Ausführungsbeispiel,

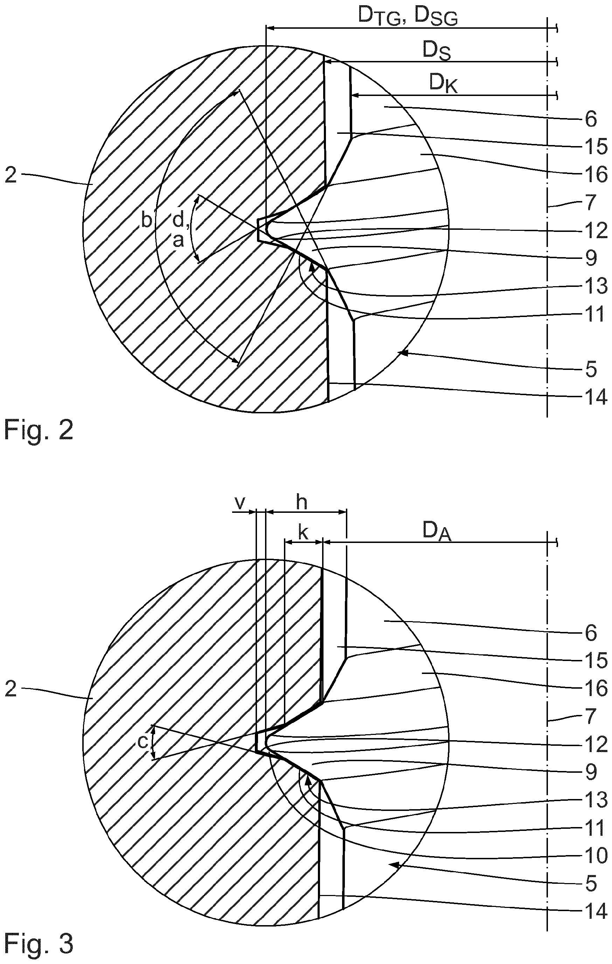

- Fig. 2: eine vergrößerte Detailansicht des Details II in Fig. 1,
- Fig. 3: eine vergrößerte Detailansicht des Details III in Fig. 1,
- Fig. 4: eine Fig. 2 entsprechende vergrößerte Detailansicht einer Schraube gemäß einem nicht erfindungsgemäßen Ausführungsbeispiel,
- Fig. 5: eine Fig. 3 entsprechende Detailansicht der Schraube gemäß dem zweiten Ausführungsbeispiel,
- Fig. 6: eine Fig. 2 entsprechende Detailansicht einer Schraube gemäß einem nicht erfindungsgemäßen Ausführungsbeispiel,
- Fig. 7: eine Fig. 3 entsprechende Darstellung der Schraube gemäß dem dritten Ausführungsbeispiel,
- Fig. 8: ein schematischer Längsschnitt einer Schraube gemäß einem nicht erfindungsgemäßen Ausführungsbeispiel,
- Fig. 9: eine vergrößerte Detaildarstellung gemäß Detail IX in Fig. 8,
- Fig. 10: eine vergrößerte Detailansicht gemäß Detail X in Fig. 8,
- Fig. 11: eine Fig. 8 entsprechende Darstellung einer Schraube gemäß einem Ausführungsbeispiel der Erfindung,
- Fig. 12: eine vergrößerte Detailansicht des Details XII in Fig. 11 und
- Fig. 13: eine vergrößerte Detailansicht gemäß Detail XIII in Fig. 11.

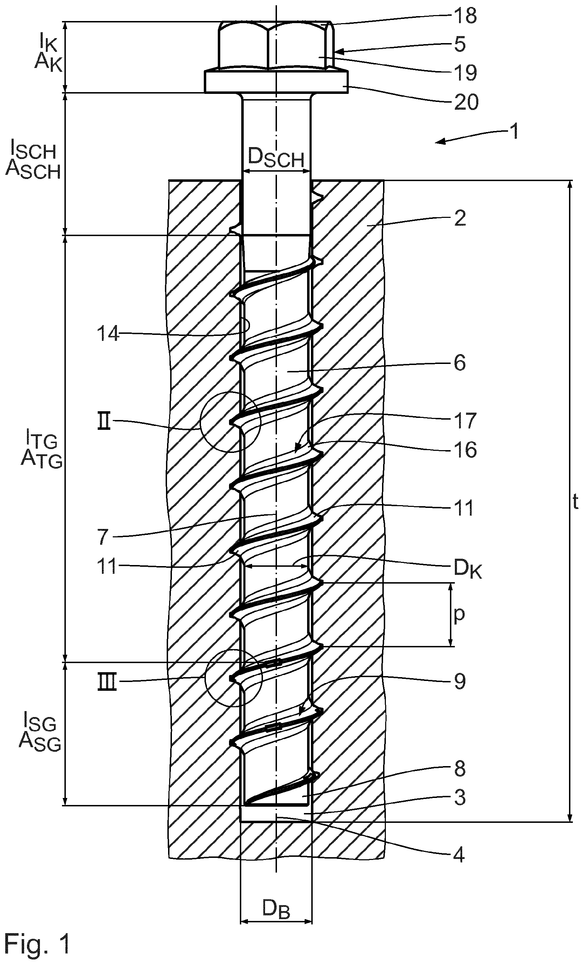

Eine in Fig. 1 im Ganzen mit 1 bezeichnete Anordnung umfasst Beton als poröses Material 2, in das ein Bohrloch 3 eingebohrt ist. Das Bohrloch 3 erstreckt sich entlang einer Bohrlochlängsachse 4 und weist eine Bohrlochtiefe t auf. Das Bohrloch 3 weist einen Bohrlochdurchmesser D_{B} auf.

In das Bohrloch 3 ist eine Schraube 5 eingeschraubt. Die Schraube 5 ist eine selbstschneidende Betonschraube. Die Schraube 5 weist einen im Wesentlichen zylindrischen Kern 6 auf mit einer Mittellängsachse 7 und mit einem Kern-Durchmesser D_{K}. Der Kern-Durchmesser D_{K} ist kleiner als der Bohrloch-Durchmesser D_{B}. Insbesondere gilt D_{K}≤0,8xD_{B}, insbesondere D_{K}≤0,85xD_{B}, insbesondere D_{K}≤0,9xD_{B}, insbesondere D_{K}≤0,95xD_{B} und insbesondere D_{K}≤0,98xD_{B}.

Zwischen dem Kern 6 und der Bohrlochinnenwand 14 ist ein ringförmiger Spalt 15 gebildet, dessen Spaltbreite durch die Differenz des Kern-Durchmessers D_{K} von dem Bohrloch-Durchmesser D_{B} abhängt. Der ringförmige Spalt 15 dient zur Aufnahme von Bohrmehl. Der ringförmige Spalt 15 und insbesondere dessen Spaltbreite ist breiter, also großzügiger ausgeführt als bei aus dem Stand der Technik bekannten Schrauben.

Durch den Ringspalt 15 ist Volumen geschaffen insbesondere zur Aufnahme einer aushärtbaren Masse, um die Verankerung der Schraube im Bohrloch zusätzlich zu verbessern. Dadurch, dass die Gewindeflanken des Schneidgewindes und/oder des Traggewindes in dem eingeschnittenen Gewinde zentriert angeordnet sind, ist ein vollflächiges Einbetten der Gewindeflanken 11 in der aushärtbaren Masse möglich. Dadurch gewährleistet eine derart eingebettete Schraube eine verbesserte Isolierung, insbesondere gegenüber im Beton befindlichen reaktiven Materialien.

Die Schraube 5 ist konzentrisch in dem Bohrloch 3 angeordnet. Die Bohrlochlängsachse 4 und die Mittellängsachse 7 sind zueinander parallel angeordnet. Insbesondere liegen die Bohrlochlängsachse 4 und die Mittellängsachse 7 übereinander. Der Kern 6 weist ein Einführende 8 auf, mit dem die Schraube 5 in das Bohrloch 3 eingeführt ist. Das Einführende 8 ist an einem Bohrlochgrund angeordnet. Ausgehend von dem Einführende erstreckt sich ein Schneidgewinde-Abschnitt A_{SG}, dem sich entlang der Mittellängsachse 7 ein Traggewinde-Abschnitt A_{TG}, ein gewindefreier SchaftAbschnitt A_{SCH} und ein Kopf-Abschnitt A_{K} anschließen.

Entlang des Schneidgewinde-Abschnitts A_{SG} ist einstückig mit dem Kern 6 ein Schneidgewinde 9 ausgebildet. Das Schneidgewinde 9 weist einen Schneidgewinde-Außendurchmesser D_{SG} auf. Der Schneidgewinde-Außendurchmesser D_{SG} ist größer als der Bohrloch-Durchmesser D_{B}. Mit dem Schneidgewinde 9 wird eine Gewindefurche in die Bohrlochinnenwandung geschnitten.

An dem Schneidgewinde 9 sind entlang des äußeren Umfangs regelmäßig beabstandet Schneidelemente 10 angeordnet. Die Schneidelemente 10 stehen jeweils am Schneidgewinde 9 über. Ein Verzahnungsüberstand v in radialer Richtung bezogen auf die Mittellängsachse 7 beträgt gemäß dem gezeigten Ausführungsbeispiel etwa 10% einer Gewindetiefe h. Als Gewindetiefe wird die Hälfte der Differenz von Schneidgewinde-Außendurchmesser D_{SG} und dem Kerndurchmesser D_{K} verstanden, also: h=0,5x(D_{SG}-D_{K}). In Abhängigkeit der Größe des Verzahnungsüberstands v kann die Schneidleistung veränderlich eingestellt werden. Je größer der Verzahnungsüberstand v ist, desto höher ist die Schneidleistung.

Die Schneidelemente 10 sind an dem Schneidgewinde 9 aufgewalzt und induktiv gehärtet. Die Schneidelemente 10 sind im Wesentlichen prismaförmig ausgeführt mit einem trapezähnlichen Querschnitt in einer zu der Zeichenebene gemäß Fig. 1 parallelen Ebene. Senkrecht zu dieser Ebene erstrecken sich die Schneidelemente entlang einer Prismalängsachse. Insbesondere weisen die Schneidelemente 10 keine zusätzlichen, nach außen vorragenden Schneidkanten oder nach innen, zu der Mittellängsachse 7 gerichteten Schneidkerben auf.

Das Schneidelement 10 weist einen Schneidelement-Flankenwinkel c auf, der gemäß dem gezeigten Ausführungsbeispiel etwa 40% beträgt. Das Schneidelement 10 ist zumindest abschnittsweise an Flanken 11 des Schneidgewindes 9 überlappend angeordnet. Das bedeutet, dass die von den Schneidelementen 10 ausgebrochenen Gewindefurchen 12 größer sind als das Schneidgewinde 9. Das Schneidgewinde 9 liegt mit den Flanken 11 entlang einer Kontaktfläche 13 an. Die Kontaktfläche 13 ist kegelstumpfförmig ausgeführt. Die Kontaktfläche 13 hat in einer radialen Richtung bezogen zur Mittellängsachse 7 eine Länge k. Die Länge k ist insbesondere kleiner als die Hälfte der Differenz des Schneidgewinde-Außendurchmessers D_{SG} und dem Bohrloch-Durchmesser D_{B}, also: k<0,5x(D_{SG}-D_{B}).

Das Schneidgewinde 9 weist einen Schneidgewinde-Flankenwinkel a auf, der gemäß dem gezeigten Ausführungsbeispiel etwa 60° beträgt. Insbesondere ist der Schneidgewinde-Flankenwinkel a größer als der Schneidelement-Flankenwinkel c. Insbesondere beträgt der Schneidgewinde-Flankenwinkel a zwischen 50° und 70°, insbesondere zwischen 55° und 65° und insbesondere etwa 60°.

Das Schneidgewinde 9 ist einteilig mit dem Kern 6 ausgeführt.

Einstückig mit dem Kern 6 ist ein Abstützelement 16 ausgebildet. Das Abstützelement 16 ist jeweils als Übergangsabschnitt oberhalb und unterhalb der Flanken 11 des Schneidgewindes 9 ausgebildet. Das Abstützelement 16 ist jeweils als kegelstumpfförmige Verdickung des Schneidgewindes 9 am Kern 6 ausgeführt. Das Abstützelement erstreckt sich schraubenlinienförmig zumindest abschnittsweise entlang des Schneidgewinde-Abschnitts A_{SG}. Das Abstützelement 16 weist eine virtuelle Mittellinie auf, die identisch ist mit einer Mittellinie des Schneidgewindes 9. Bezogen auf die Mittellängsachse 7 sind das Schneidgewinde 9 und das Abstützelement 16 parallel und insbesondere übereinanderliegend angeordnet.

Das Abstützelement 16 dient zum Abstützen der Schraube 5 in dem Bohrloch 3. Das Abstützelement 16 weist einen Abstützelement-Außendurchmesser D_{A} auf. Der Abstützelement-Außendurchmesser D_{A} entspricht einem maximalen Durchmesser des Abstützelements 16 am Übergang zu dem Schneidgewinde 9. Gemäß dem gezeigten Ausführungsbeispiel entspricht der Abstützelement-Außendurchmesser D_{A} etwa dem Bohrlochdurchmesser D_{B}.

Das Schneidgewinde 9 und das Abstützelement 16 erstrecken sich entlang einer identischen Schraubenlinie.

Der Abstützelement-Außendurchmesser D_{A} ist kleiner als der Schneidgewinde-Außendurchmesser D_{SG}. Gemäß dem gezeigten Ausführungsbeispiel gilt D_{A}≈0,8xD_{SG}.

Mit dem Abstützelement 16 kann die Schraube 5 vorteilhaft an der Bohrlochinnenwandung 14 abgestützt werden. Es ist insbesondere nicht erforderlich, dass der Kern 6 einen vergrößerten Kerndurchmesser aufweist, der etwa dem Abstützelement-Außendurchmesser entspricht. Dadurch ist der Materialaufwand für die Herstellung der Schraube reduziert. Zusätzlich ist gewährleistet, dass der Spalt 15 eine ausreichende Spaltbreite, also ausreichend Volumen für Bohrmehl zur Verfügung stellt. Dadurch, dass eine linienförmige, insbesondere schraubenlinienförmige, Abstützung der Schraube an der Bohrlochinnenwandung 14 gewährleistet ist, ist die Abstützung einerseits ausreichend stabil und andererseits mit reduzierter Kontaktfläche ausgeführt. Das Eindrehdrehmoment ist reduziert.

Bezogen auf eine virtuelle Mittellinie des Schneidgewindes 9 und insbesondere der Gewindefurche 12 ist das Abstützelement 16 symmetrisch angeordnet. Mittels des Abstützelements 16 ist die Schraube 5 selbstzentrierend in dem Bohrloch 3 angeordnet.

Dadurch, dass aufgrund des Abstützelements 16 die Länge der Flanken 11 des Schneidgewindes 9 reduziert ist, ist die Länge k der Kontaktfläche 13 reduziert. Dadurch ist das von den Flanken 11 des Schneidgewindes 9 herausgeschnittene Material reduziert. Die Schneidarbeit der Schraube 5 ist reduziert. Dadurch ist das Eindrehdrehmoment zusätzlich reduziert.

Der Abstützelement-Außendurchmesser D_{A} ist größer als der Kern-Durchmesser D_{K}. Gemäß dem gezeigten Ausführungsbeispiel beträgt der Abstützelement-Außendurchmesser D_{A} etwa 110% des Kern-Durchmessers D_{K}.

Das Abstützelementelement 16 ist als Abstützgewinde ausgeführt und weist einen Abstützgewinde-Flankenwinkel b auf, der gemäß dem gezeigten Ausführungsbeispiel etwa 120° beträgt. Insbesondere beträgt der Abstützgewinde-Flankenwinkel b zwischen 40° und 160°, insbesondere zwischen 50° und 150°, insbesondere zwischen 75° und 140°, insbesondere zwischen 90° und 135°, insbesondere zwischen 100° und 130°. Der Abstützgewinde-Flankenwinkel b ist größer als der Schneidgewinde-Flankenwinkel a und größer als der Schneidelement-Flankenwinkel c.

Entlang der Mittellängsachse 7 sind das Abstützelement 16 und das Schneidgewinde 9 kontinuierlich veränderlich ausgeführt. Das bedeutet, dass bei dem Schneidgewinde 9 und bei dem Abstützelement 16 entlang der Mittellängsachse 7 der jeweilige Außendurchmesser D_{A} bzw. D_{SG} und der zugehörige Flankenwinkel b bzw. a sich kontinuierlich verändert. Mit Beginn des Schneidgewindes 9 am Einführende 8 ist zunächst kein Abstützelement ausgebildet. Das Schneidgewinde 9 weist im Bereich des Einführendes 8 einen reduzierten Anfangsdurchmesser auf, der entlang der Schraubenlinie von dem Kern-Durchmesser D_{K} bis hin zum Schneidgewinde-Außendurchmesser D_{SG} anwächst.

Entlang des Traggewinde-Abschnitts A_{TG} ist ein Traggewinde 17 vorgesehen. Das Traggewinde 17 ist im Wesentlichen identisch zu dem Schneidgewinde 9 ausgeführt, wobei keine Schneidelemente 10 an dem Traggewinde 17 vorgesehen sind. Im Übrigen, insbesondere die geometrische Ausgestaltung des Traggewindes 17, stimmt das Traggewinde 17 mit dem Schneidgewinde 9 überein. Das bedeutet, dass ein Traggewinde-Außendurchmesser D_{TG} identisch ist mit dem Schneidgewinde-Außendurchmesser D_{SG}. Ein Traggewinde-Flankenwinkel d ist identisch mit dem Schneidgewinde-Flankenwinkel a. Insbesondere ist das Traggewinde 17 entlang einer kontinuierlichen Schraubenlinie im unmittelbaren Anschluss an das Schneidgewinde 9 ausgeführt. Entlang des Kerns 6 ist eine kontinuierliche Gewindewendel angeordnet. Beim Eindrehen der Schraube 5 greift das Traggewinde 17 in die von dem Schneidgewinde 9 in das Material 2 geschnittene Gewindefurchen 12 ein. Der Schneidgewinde-Abschnitt A_{SG} erstreckt sich entlang der Mittellängsachse 7 über etwa zwei volle Umdrehungen der Gewindewendel. Eine Länge l_{SG} des Schneidgewinde-Abschnitts A_{SG} entlang der Mittellängsachse 7 beträgt etwa die doppelte Gewindesteigung p, also l_{SG}≈2xp.

Die Länge l_{TG} des Traggewinde-Abschnitts A_{TG} beträgt gemäß dem gezeigten Ausführungsbeispiels mehr als 6 volle Gewindewendelumdrehungen, also l_{TG}>6xp. Das bedeutet, dass die Länge l_{TG} größer ist als das Dreifache der Länge l_{SG}. Mit dem Traggewinde-Abschnitt A_{TG} ist die Schraube 5 an dem Material 2 gehalten. Wegen der Länge l_{TG} ist eine ausreichende Verankerung der Schraube 5 im Material 2 gewährleistet.

Die Länge l_{SCH} des gewindefreien Schaftabschnitts A_{SCH} entspricht in etwa der Länge l_{SG} des Schneidgewinde-Abschnitts A_{SG} gegenüber dem Schneidgewinde-Abschnitt A_{SG} und dem Traggewinde-Abschnitt A_{TG} ist im Bereich des Schaftabschnitts A_{SCH} der Schaftdurchmesser D_{SCH} gegenüber dem Kern-Durchmesser D_{K} vergrößert. Der Schaft-Durchmesser D_{SCH} entspricht im Wesentlichen dem Rohteildurchmesser einer Stange, aus der die Schraube 5 gewalzt worden ist. Der Schaftabschnitt A_{SCH} dient insbesondere zum Befestigen eines Befestigungsgegenstands an dem Untergrund 2. Der Schaftabschnitt A_{SCH} ragt aus dem Bohrloch 3 an dem Material 2 über. An einem dem Einführende 8 gegenüberliegenden Außenende 18 ist der Kopf-Abschnitt A_{K} angeordnet. Der Kopf-Abschnitt A_{K} weist einen Außen-Sechskantschraubenkopf 19 und eine einteilig daran angeformte Kopf-Scheibe 20 auf, um eine Flächenpressung für einen zu haltenden Gegenstand zu verbessern. Der Kopf 19 dient als Drehmomentübertragungsmittel, um ein Drehmoment um die Mittellängsachse 7 auf die Schraube 5 aufzubringen. Dazu ist es wesentlich, dass der Kopf 19 einen in einer Ebene senkrecht zur Mittellängsachse 7 unrunden Querschnitt aufweist. Der Kopf 19 kann auch als unrunde Innen-Kontur, beispielsweise als Innensechskant-Kontur ausgeführt sein. Auf die Kopfscheibe 20 kann auch verzichtet werden. Eine derart ausgeführte Schraube kann vollständig innerhalb des Bohrlochs 3 angeordnet sein und insbesondere nicht aus dem Bohrloch 3 an dem Werkstoff 2 überstehen.

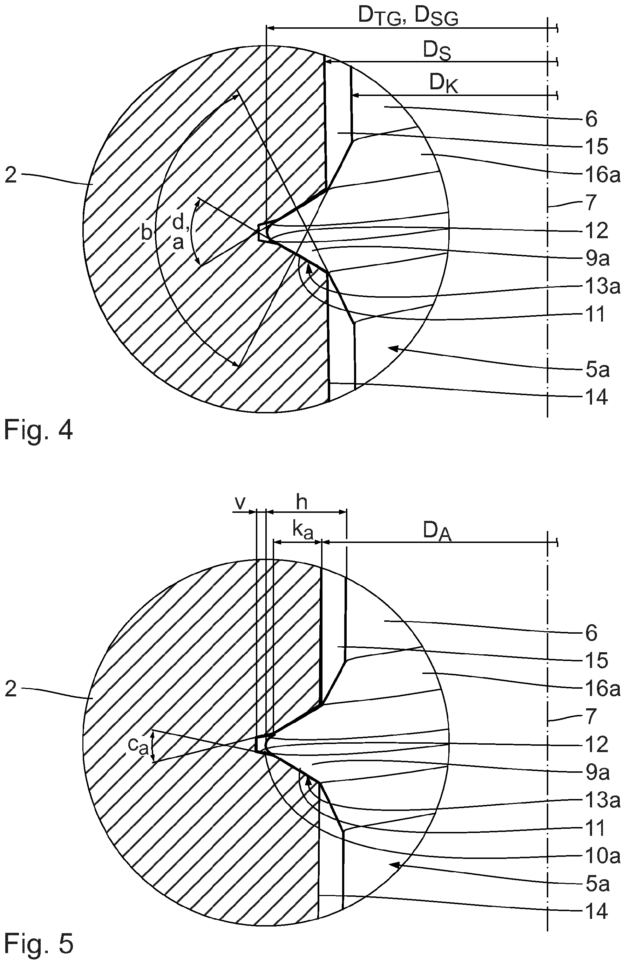

Im Folgenden wird unter Bezugnahme auf die Fig. 4 und 5 ein nicht erfindungsgemäßes Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass der Schneidelement-Flankenwinkel cₐ reduziert ist. Zudem ist das Schneidelement 10a im Wesentlichen radial auf den äußeren Umfang des Schneidgewindes 9a aufgesetzt. Insbesondere überdeckt das Schneidelement 10a die Flanken 11 des Schneidgewindes 9a nicht oder nur unwesentlich. Dies führt dazu, dass die Länge kₐ der Kontaktfläche 13a erhöht ist. Die Belastungsfähigkeit der Schraube 5a, also die Widerstandskraft gegen axiales Herausziehen entlang der Mittellängsachse 7 ist dadurch erhöht.

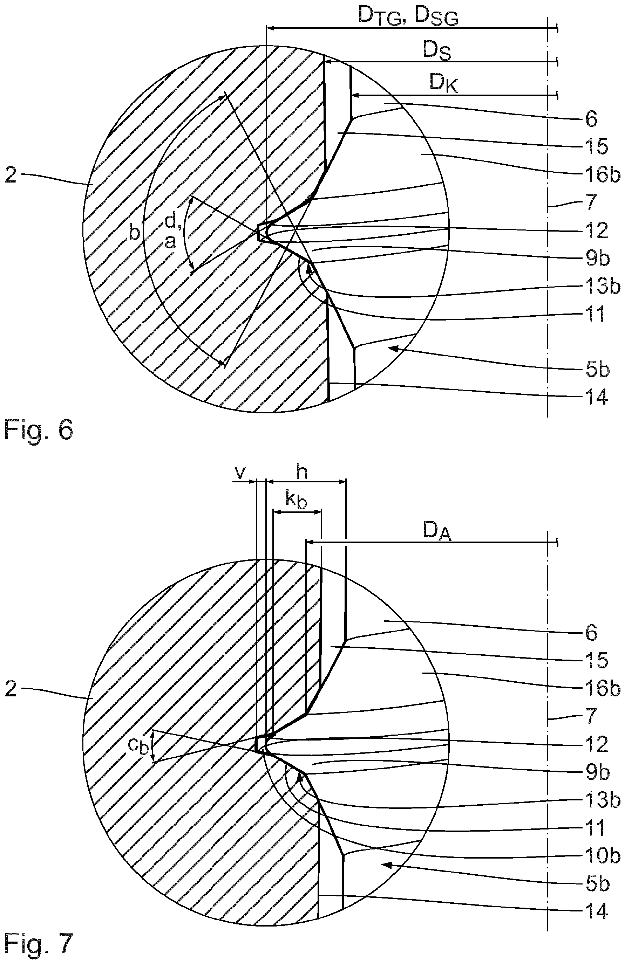

Gegenüber dem Schneidelement gemäß dem ersten Ausführungsbeispiel ist das Schneidelement 10a schlanker und damit scharfkantiger ausgeführt. Die Schneidwirkung des Schneidelements 10a ist verbessert. Die scharfkantige Ausführung des Schneidelements 10a bewirkt aber auch einen erhöhten Verschleiß des Schneidelements 10a beim Eindrehen der Schraube 5a. Infolge des Eindrehens der Schraube 5a wird das Schneidelement 10a verbraucht. Insbesondere ist bei einer Einschraubtiefe, die etwa 30% bis 50% der Bohrlochtiefe t entspricht, das Schneidelement 10a abgenutzt, sodass das Schneidelement 10a keine Schneidwirkung mehr entfaltet. Zu diesem Zeitpunkt, also bei der genannten Einschraubtiefe sind aber bereits ausreichend Gewindefurchen 12 in das Material 2 eingeschnitten, die für eine ausreichende Tragkraft der Schraube 5a in dem Material 2 ausreichen. Im Folgenden wird unter Bezugnahme auf die Fig. 6 und 7 ein weiteres nicht erfindungsgemäßes Ausführungsbeispiel beschrieben. Konstruktiv identische Teile erhalten dieselben Bezugszeichen wie bei den ersten beiden Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Bei dem dritten Ausführungsbeispiel ist das Schneidelement 10b im Wesentlichen identisch zu dem Schneidelement 10a gemäß dem zweiten Ausführungsbeispiel ausgeführt.

Jedoch ist der Abstützelement-Außendurchmesser D_{A} gegenüber den beiden ersten Ausführungsbeispielen vergrößert. Insbesondere gilt für das gezeigte Ausführungsbeispiel, dass der Abstützelement-Außendurchmesser D_{A} größer ist als der Bohrloch-Durchmesser D_{B}. Das bedeutet, dass beim Eindrehen der Schraube 5b zumindest anteilig mittels des Abstützelements 16b eine Schneidleistung erbracht wird. Der Abstützelement-Flankenwinkel b wird entsprechend an der Gewindefurche 12 abgebildet.

Die Abstützwirkung ist dadurch erhöht. Der Kern-Durchmesser D_{K} ist gegenüber den beiden ersten Ausführungsbeispielen unverändert. Dadurch, dass das Abstützelement 16b zumindest abschnittsweise an dem Material 2 anliegt, ist die Kontaktfläche 13b gegenüber dem zweiten Ausführungsbeispiel vergrößert, wenngleich die radiale Länge k_{b} gegenüber dem zweiten Ausführungsbeispiel unverändert ist.

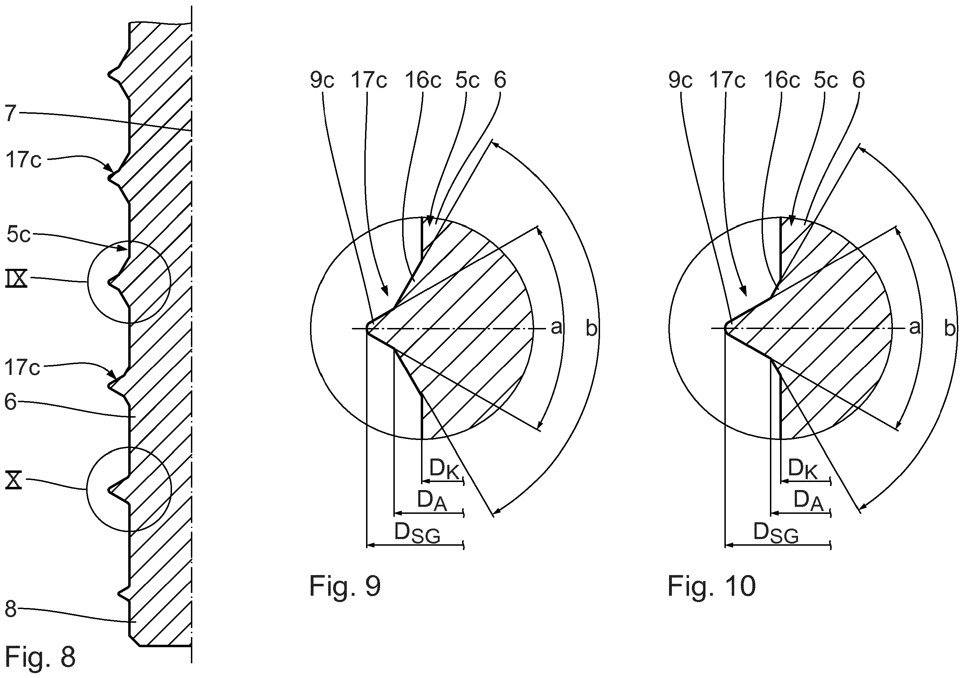

Im Folgenden wird unter Bezugnahme auf Fig. 8 bis 10 ein weiteres nicht erfindungsgemäßes Ausführungsbeispiel beschrieben. Konstruktiv identisehe Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied der Schraube 5c gegenüber den vorherigen Ausführungsbeispielen besteht darin, dass das Abstützelement 16c entlang der Mittellängsachse 7 kontinuierlich veränderlich ausgeführt ist. Aus Darstellungsgründen sind Details der Schraube 5c wie beispielsweise die Schneidelemente, der Schaftabschnitt A_{SCH} und der Kopfabschnitt A_{K} nicht dargestellt.

In einem unteren, dem Einführende 8 zugewandten Bereich der Schraube 5c weist das Abstützelement 16c einen Abstützelement-Flankenwinkel b und einen Abstützelement-Außendurchmesser D_{A} auf. In diesem unteren Bereich gemäß Fig. 10, der innerhalb des Schneidgewinde-Abschnitts A_{SG} angeordnet ist, ist der Abstützelement-Außendurchmesser D_{A} etwa 1,05 mal der Kern-Durchmesser D_{K}. Der Abstützelement-Flankenwinkel b beträgt etwa 140°.

Der Schneidgewinde-Flankenwinkel a und der Abstützelement-Flankenwinkel b sind in dem Traggewinde-Abschnitt A_{TG} gegenüber der Ausführung im Schneidgewinde-Abschnitt A_{SG} unverändert. Auch der Kern-Durchmesser D_{K} und der Schneidgewinde-Außendurchmesser D_{SG} sind unverändert. Gegenüber dem Schneidgewinde-Abschnitt A_{SG} ist der Abstützelement-Außendurchmesser D_{A} vergrößert. Insbesondere beträgt der Abstützelement-Außendurchmesser D_{A} etwa 110% des Kern-Durchmessers D_{K}. Das bedeutet, dass der kegelstumpfförmige Abschnitt des Abstützelements 16c in einer Richtung radial zur Mittellängsachse 7 vergrößert ist. Die Kontaktfläche 13c der Flanken 11 des Schneidgewindes 9c bzw. des Traggewindes 17c ist dadurch reduziert.

Insbesondere beträgt das Verhältnis von Abstützelement-Außendurchmesser D_{A} zu Kern-Durchmesser D_{K} zwischen 0,7 und 1,0. Das Verhältnis von Schneidgewinde-Flankenwinkel a zu Abstützelement-Flankenwinkel b beträgt insbesondere zwischen 0,33 und 1,0. Der Schneidgewinde-Flankenwinkel a beträgt insbesondere zwischen 30° und 70°, insbesondere zwischen 40° und 60° und insbesondere zwischen 50° und 70°.

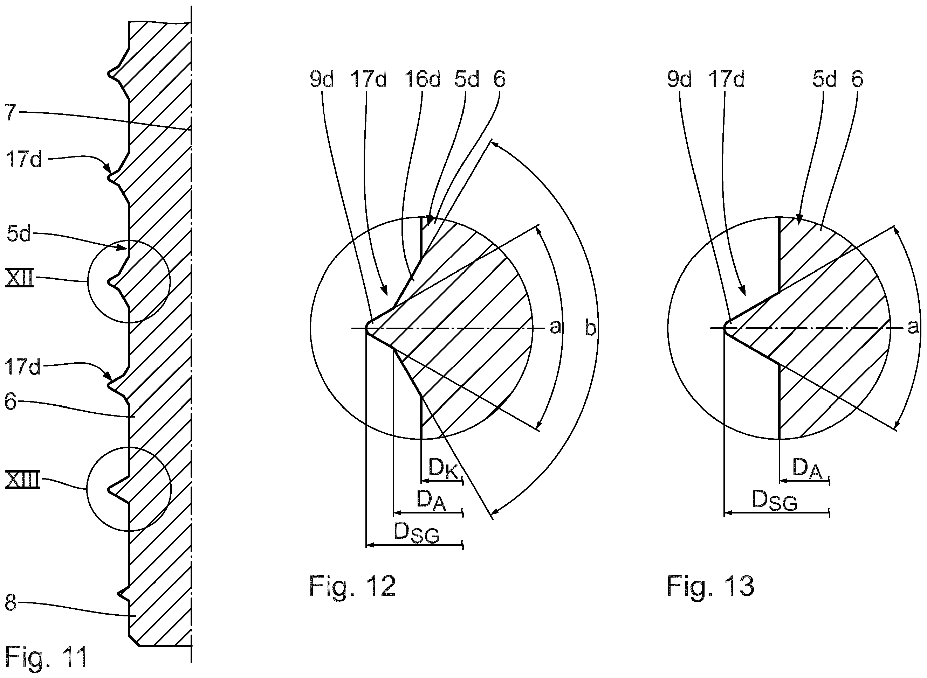

Im Folgenden wird unter Bezugnahme auf Fig. 11 bis 13 ein Ausführungsbeispiel der Erfindung beschrieben. Konstruktiv identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Der wesentliche Unterschied der Schraube 5d gemäß dem vorherigen Ausführungsbeispiel ist die veränderliche Ausführung des Abstützelements 16d. Insbesondere ist das Abstützelement ausschließlich innerhalb des Traggewinde-Abschnitts A_{TG} vorgesehen. Entlang des Schneidgewinde-Abschnitts A_{SG}, also ausgehend von dem Einführende 8 entlang der Mittellängsachse 7 ist kein Abstützelement ausgebildet. Dadurch ist die Schneidwirkung des Schneidgewindes 9d zusätzlich verbessert.

## Patentansprüche

1. Schraube zum Einschrauben in ein Bohrloch (3) in einem Material (2), wobei die Schraube (5d) umfasst
a. einen im Wesentlichen zylindrischen Kern (6) mit einer Mittellängsachse (7) und mit einem Kern-Durchmesser (D_{K}),
b. ein einstückig mit dem Kern (6) ausgebildetes, sich entlang eines Schneidgewinde-Abschnitts (A_{SG}) erstreckendes, einen Schneidgewinde-Außendurchmesser (D_{SG}) aufweisendes Schneidgewinde (9d) zum Eindrehen in das Material (2), wobei sich der Schneidgewinde-Abschnitt (A_{SG}) ausgehend von einem Einführende (8) des Kerns (6) erstreckt, wobei sich dem Schneidgewinde-Abschnitt (A_{SG}) entlang der Mittellängsachse (7) ein Traggewinde-Abschnitt (A_{TG}), ein gewindefreier Schaftabschnitt (A_{SCH}) und ein Kopf-Abschnitt (A_{K}) anschließen, wobei der Traggewinde-Abschnitt (A_{TG}) ein Traggewinde (17d) aufweist,
c. ein am Schneidgewinde (9d) angeordnetes Schneidelement (10d), das am Schneidgewinde (9d) übersteht, und
d. ein einstückig mit dem Kern (6) ausgebildetes Abstützelement (16d) zum Abstützen der Schraube (5d) im Bohrloch (3),
**dadurch gekennzeichnet, dass**
das Abstützelement (16d) als Abstützgewinde mit einem Abstützgewinde-Flankenwinkel (b) ausgeführt ist,
das Abstützgewinde im Wesentlichen als eine entlang der Mittellängsachse (7) sich begrenzt erstreckende Verdickung von Flanken (11) des Traggewindes (17d) ausgeführt ist,
das Abstützelement (16d) ausschließlich innerhalb des Traggewinde-Abschnitts (A_{TG}) vorgesehen ist.

2. Schraube gemäß Anspruch 1, **dadurch gekennzeichnet, dass** das Abstützelement (16d) einen Abstützelement-Außendurchmesser (D_{A}) aufweist, der kleiner ist als der Schneidgewinde-Außendurchmesser (D_{SG}), wobei insbesondere gilt: D_{A} ≤ 0,9 · D_{SG}, insbesondere D_{A} ≤ 0,85 · D_{SG}, insbesondere D_{A} ≤ 0,8 · D_{SG} und insbesondere D_{A} ≤ 0,75 · D_{SG}.

3. Schraube gemäß einem der vorstehenden Ansprüche, **dadurch gekennzeichnet, dass** das Abstützelement (16d) einen Abstützelement-Außendurchmesser (D_{A}) aufweist, der größer ist als der Kern-Durchmesser (D_{K}), wobei insbesondere gilt: D_{A} ≥ 1,05 · D_{K}, insbesondere D_{A} ≥ 1,07 · D_{K}, insbesondere D_{A} ≥ 1,1 · D_{K} und insbesondere D_{A} ≥ 1,13 · D_{K}.

4. Schraube gemäß einem der vorstehenden Ansprüche, **dadurch gekennzeichnet, dass** der Abstützgewinde-Flankenwinkel (b) zwischen 40° und 160°, insbesondere zwischen 50° und 150°, insbesondere zwischen 75° und 140°, insbesondere zwischen 90° und 135°, insbesondere zwischen 100° und 130° und insbesondere 120° beträgt.

5. Schraube gemäß einem der vorstehenden Ansprüche, **dadurch gekennzeichnet, dass** das Abstützelement (16d) entlang der Mittellängsachse (7) veränderlich ausgeführt ist, wobei die veränderliche Ausführung insbesondere kontinuierlich oder diskontinuierlich erfolgt.

6. Schraube gemäß einem der vorstehenden Ansprüche, **dadurch gekennzeichnet, dass** das Schneidgewinde (9d) entlang der Mittellängsachse (7) veränderlich ausgeführt ist, wobei die veränderliche Ausführung insbesondere kontinuierlich oder diskontinuierlich erfolgt.

7. Schraube gemäß einem der vorstehenden Ansprüche, **dadurch gekennzeichnet, dass** ein Verzahnungsüberstand (v) mindestens 3% der Gewindetiefe (h) des Schneidgewindes (9d), insbesondere mindestens 5% der Gewindetiefe (h) des Schneidgewindes (9d), insbesondere mindestens 8% der Gewindetiefe (h) des Schneidgewindes (9d) und insbesondere mindestens 10% der Gewindetiefe (h) des Schneidgewindes (9d) beträgt.

8. Schraube gemäß einem der vorstehenden Ansprüche, **dadurch gekennzeichnet, dass** das Schneidelement (10d) am Schneidgewinde (9d) aufgewalzt ist.

9. Schraube gemäß einem der vorstehenden Ansprüche, **dadurch gekennzeichnet, dass** das Schneidelement (10d) gehärtet, insbesondere induktiv gehärtet, ausgeführt ist.

10. Anordnung (1) umfassend
a. ein in einem Material (2) angebrachtes Bohrloch (3) mit einem Bohrloch-Durchmesser (D_{B}),
b. eine in das Bohrloch (3) eingeschraubte Schraube (5d) gemäß einem der vorstehenden Ansprüche.

11. Anordnung gemäß Anspruch 10, **dadurch gekennzeichnet, dass** der Kern-Durchmesser (D_{K}) kleiner ist als der Bohrloch-Durchmesser (D_{B}), wobei insbesondere gilt: D_{K} ≤ 0,8 · D_{B}, insbesondere D_{K} ≤ 0,85 · D_{B}, insbesondere D_{K} ≤ 0,9 · D_{B}, insbesondere D_{K} ≤ 0,95 · D_{B} und insbesondere D_{K} ≤ 0,98 · D_{B}.

12. Anordnung gemäß Anspruch 10 oder 11, **dadurch gekennzeichnet, dass** das Abstützelement (16d) einen Abstützelement-Außendurchmesser (D_{A}) aufweist, der im Wesentlichen so groß ist wie der Bohrloch-Durchmesser (D_{B}), wobei insbesondere gilt:
0,95 ≤ D_{B} / D_{A} ≤ 1,05, insbesondere 0,98 ≤ D_{B} / D_{A} ≤ 1,02, insbesondere 0,99 ≤ D_{B} / D_{A} ≤ 1,01 und insbesondere 0,995 ≤ D_{B} / D_{A} ≤ 1,005.

## Claims

1. Screw for screwing into a drill hole (3) in a material (2), the screw (5d) comprising
a. a substantially cylindrical core (6), having a central longitudinal axis (7) and having a core diameter (D_{K}),
b. a cutting thread (9d), which is formed integrally with the core (6), extends along a cutting-thread portion (A_{SG}) and has a cutting-thread outer diameter (DsG), for insertion into the material (2), the cutting-thread portion (A_{SG}) extending from an insertion end (8) of the core (6), the cutting-thread portion (A_{SG}) being followed along the central longitudinal axis (7) by a bearing-thread portion (A_{TG}), a threadless shank portion (A_{SCH}) and a head portion (A_{K}), the bearing-thread portion (A_{TG}) having a bearing thread (17d),
c. a cutting element (lOd), which is arranged on the cutting thread (9d) and protrudes from the cutting thread (9d), and
d. a support element (16d), formed integrally with the core (6), for supporting the screw (5d) in the drill hole (3),
**characterised in that**
the support element (16d) is realized as a support thread having a support-thread flank angle (b),
the support thread is realized substantially as a thickening, of flanks (11) of the bearing thread (17d) that extends to a limited extent along the central longitudinal axis (7),
the support element (16d) is provided exclusively within the bearing-thread portion (A_{TG}).

2. Screw according to Claim 1, **characterized in that** the support element (16d) has a support-element outer diameter (D_{A}) that is smaller than the cutting-thread outer diameter (D_{SG}), in particular: D_{A} ≤ 0.9 · D_{SG}, in particular D_{A} ≤ 0.85 · D_{SG}, in particular D_{A} ≤ 0.8 · D_{SG}, and in particular D_{A} ≤ 0.75 · D_{SG}.

3. Screw according to either one of the preceding claims, **characterised in that** the support element (16d) has a support-element outer diameter (D_{A}) that is larger than the core diameter (D_{K}), in particular:
D_{A} ≥ 1.05 · D_{K}, in particular D_{A} ≥ 1.07 · D_{K}, in particular D_{A} ≥ 1.1 D_{K}, and in particular D_{A} ≥ 1.13 · D_{K}.

4. Screw according to any one of the preceding claims, **characterised in that** the support-thread flank angle (b) is between 40° and 160°, in particular between 50° and 150°, in particular between 75° and 140°, in particular between 90° and 135°, in particular between 100° and 130°, and in particular is 120°.

5. Screw according to any one of the preceding claims, **characterized in that** the support element (16d) is realized so as to be variable along the central longitudinal axis (7), the variable realization being in particular continuous or non-continuous.

6. Screw according to any one of the preceding claims, **characterized in that** the cutting thread (9d) is realized so as to be variable along the central longitudinal axis (7), the variable execution being in particular continuous or non-continuous.

7. Screw according to any one of the preceding claims, **characterized in that** a toothing protrusion (v) is at least 3% of the thread depth (h) of the cutting thread (9d), in particular at least 5% of the thread depth (h) of the cutting thread (9d), in particular at least 8% of the thread depth (h) of the cutting thread (9d), and in particular at least 10% of the thread depth (h) of the cutting thread (9d).

8. Screw according to any one of the preceding claims, **characterized in that** the cutting element (10d) is rolled onto the cutting thread (9d).

9. Screw according to any one of the preceding claims, **characterised in that** the cutting element (10d) is hardened, in particular inductively hardened.

10. Arrangement (1) comprising
a. a drill hole (3) that is made in a material (2) and that has a drill-hole diameter (D_{B}),
b. a screw (5d) that is screwed into the drill hole (3) as claimed in any one of the preceding claims.

11. Arrangement according to Claim 10, **characterized in that** the core diameter (D_{K}) is smaller than the drill-hole diameter (D_{B}), in particular:
D_{K} ≤ 0.8 · D_{B}, in particular D_{K} ≤ 0.85 · D_{B}, in particular D_{K} ≤ 0.9 · D_{B}, in particular D_{K} ≤ 0.95 · D_{B}, and in particular D_{K} ≤ 0.98 · D_{B}.

12. Arrangement according to Claim 10 or 11, **characterized in that** the support element (16d) has a support-element outer diameter (D_{A}) that is substantially as large as the drill-hole diameter (D_{B}), in particular:
0.95 ≤ D_{B} / D_{A} ≤ 1.05, in particular 0.98 ≤ D_{B} / D_{A} ≤ 1.02, in particular 0.99 ≤ D_{B} / D_{A} ≤ 1.01, and in particular 0.995 ≤ D_{B} / D_{A} ≤ 1.005.

## Revendications

1. Vis à visser dans un trou de perçage (3) dans un matériau (2), dans laquelle la vis (5d) comprend
a. une âme (6) essentiellement cylindrique avec un axe central longitudinal (7) et un diamètre d'âme (D_{K}),
b. un filetage taraudeur (9d) formé d'un seul tenant avec l'âme (6), s'étendant de long d'une section de filetage taraudeur (A_{SG}), présentant un diamètre extérieur de filetage taraudeur (D_{SG}), à visser dans le matériau (2), dans laquelle la section de filetage taraudeur (A_{SG}) s'étend à partir d'une extrémité d'insertion (8) de l'âme (6), dans laquelle une section de filetage porteur (A_{TG}), une section de tige sans filetage (A_{SCH}) et une section de tête (A_{K}) se joignent à la section de filetage taraudeur (A_{SG}) de long de l'axe central longitudinal (7), dans laquelle la section de filetage porteur (A_{TG}) présente un filetage porteur (17d),
c. un élément taraudeur (10d) agencé contre le filetage taraudeur (9d), dépassant sur le filetage taraudeur (9d), et
d. un élément d'appui (16d) formé d'un seul tenant avec l'âme (6) pour appuyer la vis (5d) dans trou de perçage (3),
**caractérisé en ce que**
l'élément d'appui (16d) est conçu comme filetage d'appui avec un angle de flanc (b) de filetage d'appui,
le filetage d'appui essentiellement est conçu comme un renflement de flancs (11) du filetage porteur (17d), s'étendant de manière limitée de long de l'axe central longitudinal (7),
l'élément d'appui (16d) est prévu exclusivement dans la section de filetage porteur (A_{TG}).

2. Vis selon la revendication 1, **caractérisé en ce que** l'élément d'appui (16d) présente un diamètre extérieur d'élément d'appui (D_{A}) qui est inférieur au diamètre extérieur de filetage taraudeur (D_{SG}), où en particulier D_{A} ≤ 0,9 · D_{SG}, en particulier D_{A} ≤ 0,85 · D_{SG}, en particulier D_{A} ≤ 0,8 · D_{SG} et en particulier D_{A} ≤ 0,75 · D_{SG}.

3. Vis selon l'une quelconque des revendications précédentes,
**caractérisé en ce que** l'élément d'appui (16d) présente un diamètre extérieur d'élément d'appui (D_{A}) qui est supérieur au diamètre d'âme (D_{K}), où en particulier D_{A} ≥ 1,05 · D_{K}, en particulier D_{A} ≥ 1,07 · D_{K}, en particulier D_{A} ≥ 1,1 · D_{K} et en particulier D_{A} ≥ 1,13 · D_{K}.

4. Vis selon l'une quelconque des revendications précédentes,
**caractérisé en ce que** l'angle de flanc de filetage d'appui (b) est d'entre 40° et 160°, en particulier d'entre 50° et 150°, en particulier d'entre 75° et 140°, en particulier d'entre 90° et 135°, en particulier d'entre 100° et 130° et en particulier d'entre 120°.

5. Vis selon l'une quelconque des revendications précédentes,
**caractérisé en ce que** l'élément d'appui (16d) est conçu de manière variable de long de l'axe central longitudinal (7), dans laquelle la réalisation variable a lieu de manière continue ou discontinue.

6. Vis selon l'une quelconque des revendications précédentes,
**caractérisé en ce que** le filetage taraudeur (9d) est conçu de manière variable de long de l'axe central longitudinal (7), dans laquelle la réalisation variable a lieu de manière continue ou discontinue.

7. Vis selon l'une quelconque des revendications précédentes,
**caractérisé en ce qu'**une saillie de denture (v) est d'au moins 3% de la profondeur de filetage (h) du filetage taraudeur (9d), en particulier d'au moins 5% de la profondeur de filetage (h) du filetage taraudeur (9d), en particulier d'au moins 8% de la profondeur de filetage (h) du filetage taraudeur (9d) et en particulier d'au moins 10% de la profondeur de filetage (h) du filetage taraudeur (9d).

8. Vis selon l'une quelconque des revendications précédentes,
**caractérisé en ce que** l'élément taraudeur (10d) est laminé sur le filetage taraudeur (9d).

9. Vis selon l'une quelconque des revendications précédentes,
**caractérisé en ce que** l'élément taraudeur (10d) est conçu de manière durcie, en particulier de manière durcie par induction.

10. Agencement (1) comprenant
a. un trou de perçage (3) agencé dans un matériau (2) avec un diamètre de trou de perçage (D_{B}),
b. une vis (5d) vissée dans le trou de perçage (3) selon l'une quelconque des revendications précédentes.

11. Agencement selon la revendication 10, **caractérisé en ce que** le diamètre d'âme (D_{K}) est inférieur au diamètre de trou de perçage (D_{B}), où en particulier : D_{K} ≤ 0,8 · D_{B}, en particulier D_{K} ≤ 0,85 · D_{B}, en particulier D_{K} ≤ 0,9 · D_{B}, en particulier D_{K} ≤ 0,95 · D_{B} et en particulier D_{K} ≤ 0,98 · D_{B}.

12. Agencement selon la revendication 10 ou 11, **caractérisé en ce que** l'élément d'appui (16d) présente un diamètre extérieur d'élément d'appui (D_{A}) qui est essentiellement aussi grand que le diamètre de trou de perçage (D_{B}), où en particulier : 0,95 ≤ D_{B} / D_{A} ≤ 1,05, en particulier 0,98 ≤ D_{B} / D_{A} ≤ 1,02, en particulier 0,99 ≤ D_{B} / D_{A} ≤ 1,01 et en particulier 0,995 ≤ D_{B} / D_{A} ≤ 1,005.
